# EUROPEAN PATENT SPECIFICATION

(11) **EP 3 780 295 B1**
(45) Date of publication and mention of the grant of the patent: **25.09.2024**
(21) Application number: 19774868.4
(22) Date of filing: 25.03.2019
(51) Int. Cl.: H01R 13/713, G01K 1/14, H01H 9/02, H01R 13/66, G01K 3/00, H01R 24/78, H01R 25/00, H01H 50/02, H01H 50/32

(54) **ELECTRICAL OUTLET SYSTEM**
ELEKTRISCHES AUSGANGSSYSTEM
SYSTÈME DE PRISE ÉLECTRIQUE

(30) Priority: 30.03.2018 JP 2018069739
(43) Date of publication of application: 17.02.2021
(73) Proprietor: Panasonic Intellectual Property Management Co., Ltd., Osaka-shi, Osaka 540-6207 (JP)
(72) Inventor: UEDA, Yasuhiro, Osaka-shi, Osaka 540-6207 (JP); SAITO, Yu, Osaka-shi, Osaka 540-6207 (JP); IKUSHIMA, Tsuyoshi, Osaka-shi, Osaka 540-6207 (JP); KUSAMA, Kimio, Osaka-shi, Osaka 540-6207 (JP); MATSUURA, Shuji, Osaka-shi, Osaka 540-6207 (JP)
(74) Representative: Müller-Boré & Partner Patentanwälte PartG mbB
(86) International application number: PCT/JP2019/012320
(87) International publication number: WO 2019/188879

(56) References cited:
- WO-A1-2009/019801
- WO-A1-2016/038435
- JP-A- 2016 058 332
- JP-A- 2019 003 872
- JP-U- 3 023 353
- JP-U- 3 023 353
- US-A1- 2002 097 546
- US-A1- 2002 097 546
- US-A1- 2007 081 286
- US-A1- 2016 056 588

## Description

### Technical Field

The present disclosure generally relates to electrical outlet systems, and specifically, to an electrical outlet system including an open/close unit which is switched from a conduction state to an interruption state in accordance with a detection result by a temperature detector.

### Background Art

Patent Literature 1 describes an electrical outlet (wiring device) including: a terminal member (a first connector) to which an electric wire from an external power supply is electrically connected; and a connection member (a second connector) to which an attachment plug provided to an electric wire from an electric apparatus is to be detachably connected. The electrical outlet includes: a temperature detector (a temperature measuring unit) attached to, for example, at least one location of the terminal member and the connection member; and an interrupter for electrical interruption of the terminal member from the connection member.

When the electrical outlet described in Patent Literature 1 determines an abnormality with reference to a temperature detected by the temperature detector, the electrical outlet causes the interrupter to bring its contact point to be in an off state. Thus, when the influence or the like of a wire connection failure during construction or vibration applied during use increases Joule heat generated at a contact part at which the terminal member is in contact with the electric wire, a measured temperature by the temperature detector increases, and the contact point of the interrupter is brought into the off state to cut off electric power supply to the electric apparatus. Patent Literature 2 describes an electrical safety outlet for accepting a plug to provide power to electrical appliances including a power supply and an intelligent circuitry for controlling the power supply to the electrical outlet.
Patent Literature 3 describes an electrical receptacle including a housing having an inwardly directed side and an electrical resistor thermally coupled to the inwardly directed side of the housing.

### Citation List

### Patent Literature

Patent Literature 1 : JP 2016-58332 A
Patent Literature 2 : US 2002/097546 A1
Patent Literature 3 : US 2007/081286 A1

### Summary of Invention

The claimed invention is defined by the independent claims, while preferred embodiments form the subject of the dependent claims.
When in the configuration described in Patent Literature 1, an abnormality is determined even once with reference to the temperature detected by the temperature detector, the terminal member is electrically interrupted from the connection member by the interrupter, and therefore, in order to use the electrical outlet thereafter again, the electrical outlet has to be replaced. Replacement of the electrical outlet is basically unnecessary in the case of a temperature rise caused by, for example, a transient event, the electric apparatus connected to the electrical outlet, or the like, but the configuration described in Patent Literature 1 requires the replacement of the electrical outlet even in such a case and thus reduces convenience.

In view of the foregoing, it is an object of the present disclosure to provide an electrical outlet system with improved convenience.

An electrical outlet system according to one aspect of the present disclosure includes a terminal member, a connection member, a temperature detector, and an open/close unit. To the terminal member, a feed line is to be connected. To the connection member, a plug is to be connected. The temperature detector is configured to detect, as a detection temperature, a temperature of the connection member and detect a temperature of the terminal member as an auxiliary detection temperature. The open/close unit is electrically connected between the terminal member and the connection member. The open/close unit is configured to be switched from a conduction state to an interruption state when a determination condition is satisfied. The determination condition includes that the detection temperature is higher than or equal to a threshold temperature. The open/close unit is switchable from the interruption state to the conduction state when the determination condition is not satisfied. When an auxiliary determination condition including that the auxiliary detection temperature is higher than or equal to an auxiliary threshold temperature is satisfied, the open/close unit being switched from the conduction state to the interruption state, and switching of the open/close unit from the interruption state to the conduction state being restricted.
According to this aspect, even when the open/close unit once enters the interruption state, restoration of the open/close unit makes the electrical outlet system reusable without replacing the electrical outlet system. Thus, in the case where the replacement of the electrical outlet system is basically unnecessary, such as in the case of a temperature rise caused by, for example, a transient event, the replacement of the electrical outlet system is unnecessary, and convenience as the electrical outlet system is thus improved. Furthermore, this aspect enables switching from the interruption state to the conduction state to be restricted when the temperature of the terminal member increases. Thus, for example, when electrical work such as reconnection of a feed line is required, unconsidered restoration of the open/close unit is suppressed.

### Brief Description of Drawings

FIG. 1 is a block diagram illustrating a configuration of an electrical outlet system according to one embodiment of the present disclosure;
FIG. 2A is an exterior perspective view illustrating a usage example of an electrical outlet of the electrical outlet system whose open/close unit is in a conduction state;
FIG. 2B is an exterior perspective view illustrating a usage example of the electrical outlet, wherein the open/close unit is in an interruption state;
FIG. 3 is an exploded perspective view illustrating the electrical outlet;
FIG. 4A is a front view illustrating the electrical outlet whose outer cover and inner cover are removed;
FIG. 4B is a back view illustrating the electrical outlet, wherein the outer cover and the inner cover are removed;
FIG. 5A is a cross sectional view schematically illustrating a configuration of a main part of the electrical outlet taken along line X1-X1 of FIG. 4A;
FIG. 5B is a cross sectional view schematically illustrating a configuration of the main part of the electrical outlet taken along line X2-X2 of FIG. 4B; and
FIG. 6 is a flowchart illustrating an operation example of the electrical outlet system.

### Description of Embodiments

### (1) Schema

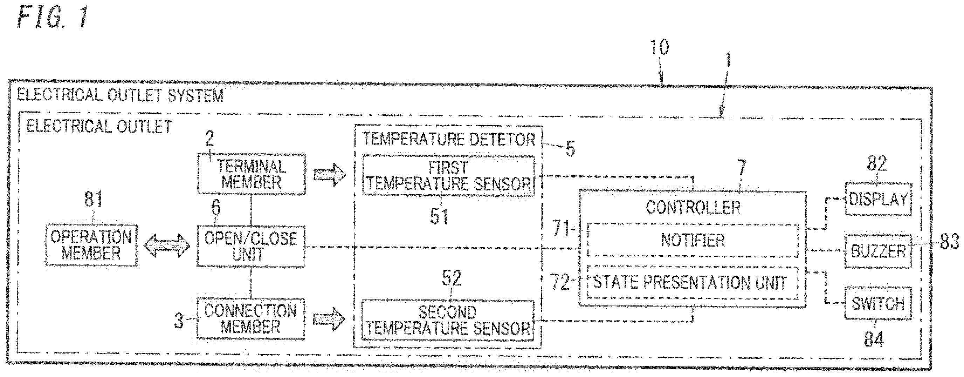

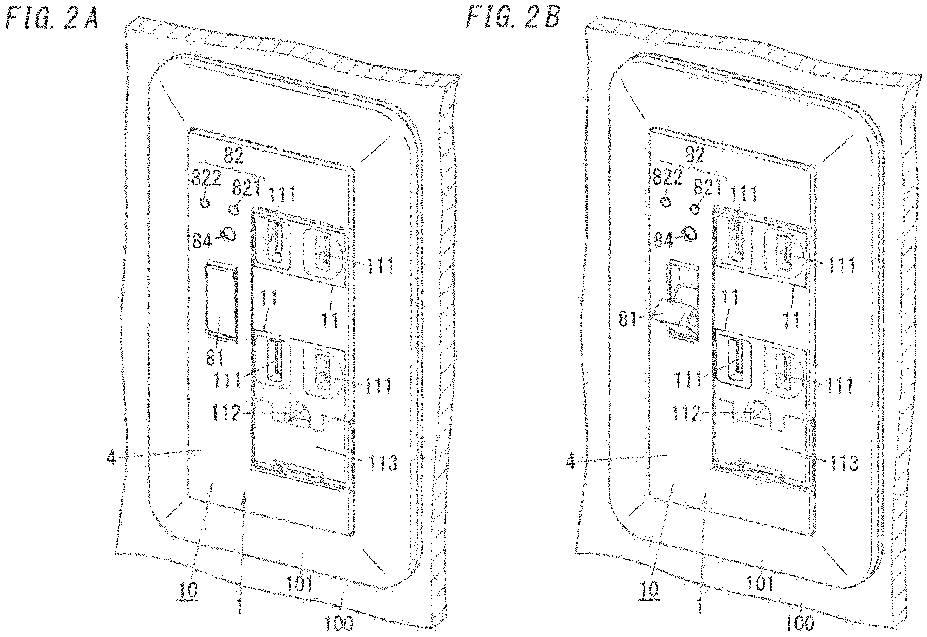

As illustrated in FIG. 1, an electrical outlet system 10 according to the present embodiment includes an electrical outlet 1. The electrical outlet 1 (an outlet) includes a terminal member 2, a connection member 3, and a housing 4 (see FIG. 2A). In the present embodiment, all of components (the terminal member 2, the connection member 3, and the like) except for the housing 4 of the electrical outlet system 10 are accommodated in or held by the housing 4. That is, in the present embodiment, all of the components of the electrical outlet system 10 are collected in one electrical outlet 1, and the electrical outlet system 10 and the electrical outlet 1 are identical.

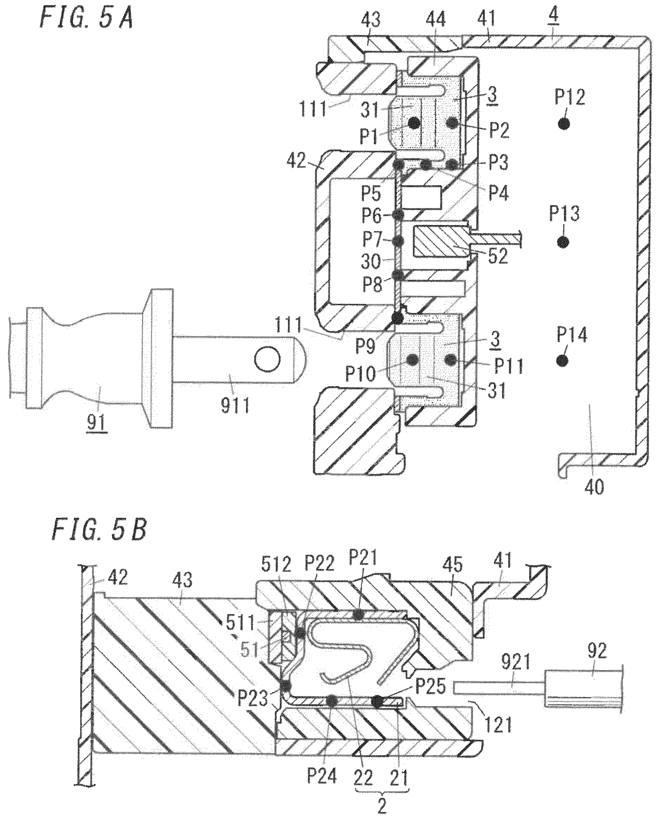

The electrical outlet 1 (the electrical outlet system 10) according to the present embodiment is a wiring device, that is, an outlet to which a plug 91 (see FIG. 5A) of, for example, an electric apparatus is to be connected and which is configured to supply electric power to the electric apparatus. The electrical outlet 1 is installed in, for example, a dwelling facility such as a detached dwelling house or a multiple residential dwelling complex, or a non-dwelling facility such as an office, a retail establishment, a school, a nursing facility, or the like. The electrical outlet 1 is attached to, for example, a construction surface 100 (see FIG. 2A) such as a wall surface, a ceiling surface, or a floor surface of a facility (a building).

As illustrated in FIG. 1, the electrical outlet system 10 of the present embodiment further includes a temperature detector 5 and an open/close unit 6 in addition to the terminal member 2 and the connection member 3. The terminal member 2 is a member to which a feed line 92 (see FIG. 5B) is to be connected. The connection member 3 is a member to which the plug 91 is to be connected. The temperature detector 5 detects, as a detection temperature, a temperature of at least one of the terminal member 2 or the connection member 3. The open/close unit 6 is electrically connected between the terminal member 2 and the connection member 3. Here, the open/close unit 6 is switched from a conduction state to an interruption state when a determination condition is satisfied. The determination condition includes that the detection temperature is higher than or equal to a threshold temperature. The open/close unit 6 is switchable from the interruption state to the conduction state when the determination condition is not satisfied.

As used herein, "switchable from the interruption state to the conduction state" means a state where switching of the open/close unit 6 from the interruption state to the conduction state is allowed, that is, a state where the open/close unit 6 in the interruption state is allowed to be switched to the conduction state. Thus, if not being "switchable from the interruption state to the conduction state", the open/close unit 6 in the interruption state is prohibited from being switched to the conduction state and maintains the interruption state. Here, the switching of the open/close unit 6 from the interruption state to the conduction state may be manually performed by a user or automatically performed by the electrical outlet system 10 when a restoration condition, for example, that a restoration signal from the outside of the electrical outlet 1 is received or that a predetermined time elapses is satisfied.

According to the above-described configuration, in the electrical outlet system 10, when the detection temperature by the temperature detector 5 is higher than or equal to the threshold temperature and the determination condition is satisfied, the open/close unit 6 is switched from the conduction state to the interruption state, thereby electrically disconnecting the terminal member 2 from the connection member 3. Thus, the electrical outlet system 10 enables the connection member 3 to be electrically disconnected from the terminal member 2 automatically if the detection temperature increases due to, for example, a contact failure between the terminal member 2 and the feed line 92 or a contact failure between the connection member 3 and the plug 91. Thus, for example, even when the plug 91 of the electric apparatus remains connected to the connection member 3, electric power supply to the electric apparatus stops, and further heat generation can be suppressed.

In addition, in the electrical outlet system 10, when the determination condition is not satisfied, the open/close unit 6 is switchable from the interruption state to the conduction state. That is, in the electrical outlet system 10, even when the determination condition is satisfied and the open/close unit 6 thus enters the interruption state once, the open/close unit 6 can thereafter be restored to the conduction state by removing a factor for satisfaction of the determination condition so that the determination condition is no longer satisfied.

Thus, according to the electrical outlet system 10, even when the open/close unit 6 enters the interruption state once, restoration of the open/close unit 6 makes the electrical outlet system 10 (the electrical outlet 1) reusable without replacing the electrical outlet system 10 (the electrical outlet 1). Thus, in the case of a temperature rise caused by, for example, a transient event, the electric apparatus connected to the electrical outlet 1, or the like, a conventional electrical outlet has to be replaced, but the replacement of the electrical outlet 1 of the present disclosure is unnecessary, and convenience as the electrical outlet system 10 is thus improved. That is, in such a case, restoring the open/close unit 6 without replacing the electrical outlet 1 makes the electrical outlet 1 reusable, and therefore, labor, cost, and time taken to replace the electrical outlet 1 are omitted. Moreover, a configuration in which restoration of the open/close unit 6 makes the electrical outlet 1 reusable as in the case of the electrical outlet system 10 according to the present embodiment is, in particular, useful, for example, for electric apparatuses, such as a refrigerator, a laundry machine, and a television set, in which changing the outlet feeding power to another electrical outlet 1 is difficult.

### (2) Details

Next, the electrical outlet system 10 according to the present embodiment will be described in detail.

### (2.1) Overall Configuration

First, the overall configuration of the electrical outlet system 10 will be described with reference to FIGS. 1 to 4B.

The electrical outlet system 10 according to the present embodiment further includes a controller 7, an operation member 81, a display section 82, a buzzer 83, and a switch 84 as illustrated in FIG. 1 in addition to the terminal member 2, the connection member 3, the housing 4 (see FIG. 2A), the temperature detector 5, and the open/close unit 6.

FIGS. 2A and 2B are perspective views each illustrating the electrical outlet 1 of the electrical outlet system 10 attached to the construction surface 100. In the present embodiment, the electrical outlet 1 is an embedded wiring device to be attached to a mounting frame of an interchangeable wiring devices of large square boss type standardized in Japanese Industrial Standards. Specifically, the electrical outlet 1 is attached to the construction surface 100 via the mounting frame. Here, the mounting frame is fixed to the construction surface 100 via an embedded box or directly. That is, the mounting frame is fixed to the construction surface 100, and thereby, the electrical outlet 1 is attached to the construction surface 100 via the mounting frame. A decorative plate 101 is attached to the mounting frame, and as illustrated in FIGS. 2A and 2B, the electrical outlet 1 is exposed on an inner side of the decorative plate 101. Here, the mounting frame may be a member separated from the housing 4 of the electrical outlet 1 or may be integrated with the housing 4. In the present embodiment, a case where the electrical outlet 1 is configured to be used indoors, that is, the construction surface 100 is an inner wall surface of a building (a facility) will be described, but the electrical outlet 1 is not limited to this example and may be configured to be used outdoors.

In the following description, in a state where the electrical outlet 1 is attached to the inner wall surface, which is the construction surface 100, of the building, a direction vertical (orthogonal) to a horizontal plane is referred to as an "upward/downward direction", and a downward direction (a gravity direction) when the electrical outlet 1 is viewed from the front side is referred to as "downward". Moreover, a direction orthogonal to the upward/downward direction and parallel to the construction surface 100 is referred to as a "rightward/leftward direction", and when the electrical outlet 1 is viewed from the front side, the rightward direction is referred to as "rightward" and the leftward direction is referred to as "leftward". Furthermore, a direction orthogonal to both the upward/downward direction and the rightward/leftward direction, that is, orthogonal to the construction surface 100, will be hereinafter referred to as a "forward/backward direction", and the rear of the construction surface 100 (i.e., the region behind the wall) will be hereinafter referred to as "backward". Note that these directions are not to limit the directions of the electrical outlet system 10 in use. For example, when the electrical outlet 1 is attached to, not the wall surface, but the floor surface, the "forward and rearward direction" is a direction vertical to the horizontal plane, and the "upward/downward direction" and the "rightward/leftward direction" are directions parallel to the horizontal plane. Moreover, also when the electrical outlet 1 is attached to the wall surface, the "rightward/leftward direction" is a direction vertical to the horizontal plane if the electrical outlet 1 is attached to the wall surface such that the "upward/downward direction" is a direction parallel to the horizontal plane (i.e., sideways).

Moreover, in the present embodiment, a two-port electrical outlet 1 to which two plugs 91 are connectable at the same time is illustrated as the electrical outlet system 10. That is, the electrical outlet 1 has two connection ports 11 so that the electrical outlet 1 is available to the two plugs 91. The two connection ports 11 are configured such that each plug 91 is connectable to a corresponding one of the two connection ports 11. The two connection ports 11 are arranged on a front surface of the housing 4 along the upward/downward direction (gravity direction). Of the two connection ports 11, one (upper) connection port 11 is a 100-V AC double-pole electrical outlet with a ground electrode, and the other (lower) connection port 11 is a 100-V AC double-pole electrical outlet without a ground electrode.

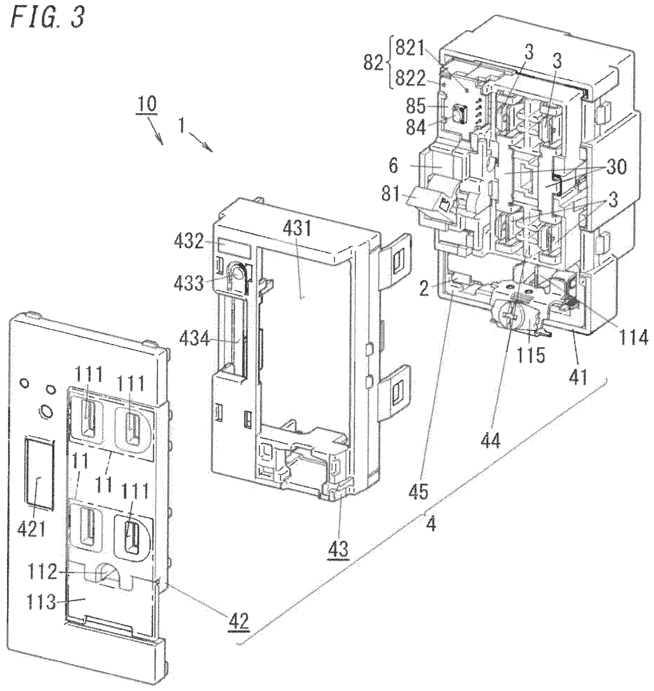

In the present embodiment, the electrical outlet 1 has a pair of terminal members 2 having opposite polarities so that the electrical outlet 1 is available to a double-pole plug 91. That is, to one terminal member 2 of the pair of terminal members 2, an L (LIVE) pole-side (i.e., HOT) feed line 92 is connected, and to the other terminal member 2, an N (NEUTRAL) pole-side (i.e., COLD) feed line 92 is connected. Similarly, the electrical outlet 1 includes a pair of connection members 3 having opposite polarities for each connection port 11 and thus includes a total of two pairs of (that is, four) connection members 3. Here, each two connection members 3 having the same polarities are connected to each other via a lead plate 30 (see FIG. 3). Moreover, the connection members 3 and the terminal member 2 having the same polarities are electrically connected to each other via the open/close unit 6.

The electrical outlet 1 includes the housing 4 and interior components such as the terminal members 2 and the connection members 3 accommodated in or held by the housing 4. As illustrated in FIG. 3, the housing 4 includes an outer body 41, an outer cover 42, an inner cover 43, an inner block 44, and a terminal block 45. The outer body 41, the outer cover 42, the inner cover 43, the inner block 44, and the terminal block 45 are combined with one another to form the housing 4. The housing 4 is made of a synthetic resin having an electrical insulation property.

The outer body 41 has a box shape having an opening in a front surface thereof. An opening surface (the front surface) of the outer body 41 has a rectangular shape whose dimension in the upward/downward direction is larger than that in the rightward/leftward direction. The inner block 44 holds the connection members 3, and in this state, the inner block 44 is, together with the other interior components (e.g., the terminal members 2 and the open/close unit 6), accommodated in the outer body 41. The inner cover 43 is attached to the front surface of the outer body 41. Thus, between the outer body 41 and the inner cover 43, the interior components including the connection members 3 held by the inner block 44 are accommodated. The outer cover 42 is attached to a front surface of the inner cover 43. In this way, the connection members 3 are accommodated between the inner block 44 and the outer cover 42. Here, the inner cover 43 has a part which corresponds to the inner block 44 and which has an opening window 431 formed to penetrate the inner cover 43 in the forward and rearward direction. Thus, a front surface of the inner block 44 holding the connection members 3 is covered with the outer cover 42. In a state where the outer cover 42 is removed, the front surface of the inner block 44 is exposed forward through the opening window 431. The terminal block 45 holds the terminal members 2, and in this state, the terminal block 45 is, together with the other interior components, accommodated in the outer body 41.

That is, the inner block 44 and the outer cover 42 constitute a holder member which holds the connection members 3. The terminal block 45 constitutes a holder member which holds the terminal members 2. In other words, the electrical outlet system 10 further includes a holding member holding at least the terminal members 2 or the connection members 3.

In the present embodiment, the outer cover 42 is further configured to be divided into a plurality of members (e.g., three members), but the outer cover 42 may be integral (one member). Here, the inner block 44 and a part, covering the inner block 44 of the output cover 42 are made of, for example, a urea-formaldehyde resin.

The part of the outer cover 42 covering the inner block 44 has the two connection ports 11 described above. One (upper) connection port 11 of the two connection ports 11 has a pair of insertion holes 111 to which a pair of blades 911 (see FIG. 5A) of the plug 91 is to be inserted. The other (lower) connection port 11 of the two connection ports 11 has a grounding insertion hole 112 to which a grounding pin of a plug with a ground electrode is to be inserted, and an earth lid 113 in addition to a pair of insertion holes 111. In the interior of the housing 4, the connection members 3 are disposed at location corresponding to the respective insertion holes 111, a first grounding member 114 is disposed at a location corresponding to the grounding insertion hole 112, and a second grounding member 115 is disposed at a location corresponding to the earth lid 113. The first grounding member 114 is a spring member to which the grounding pin of the plug with the ground electrode is to be connected. The second grounding member 115 is a screw-type terminal to which an earth conductor of the electric apparatus is to be connected. The earth conductor is detachably attachable to the second grounding member 115 in a state where the earth lid 113 is open.

Moreover, in a space which is located between the outer body 41 and the inner cover 43 and which is located on the left of the inner block 44, the open/close unit 6 and a substrate 85 are accommodated. The substrate 85 is provided above the open/close unit 6. A first indicator lamp 821 and a second indicator lamp 822, which constitute the display section 82, and the switch 84 are mounted on the substrate 85. For example, the first indicator lamp 821 and the second indicator lamp 822 are Light Emitting Diodes (LEDs) with different light emission colors, and the switch 84 is a push button switch. Thus, the open/close unit 6, the display section 82, and the switch 84 are accommodated in the housing 4 (the outer body 41 and the inner cover 43). However, the inner cover 43 is provided with a light transmitting part 432 and a cantilever 433 such that light of the display section 82 is visually perceivable from the front of the housing 4 and a push operation can be given to the switch 84 from the front of the housing 4. That is, the light of the display section 82 is visually perceivable from the front of the housing 4 through the light transmitting part 432, and the push operation can be given to the switch 84 from the front of the housing 4 via the cantilever 433. In FIGS. 2A and 2B, for the sake of convenience, locations corresponding to the display section 82 (the first indicator lamp 821 and the second indicator lamp 822) and the switch 84 on the front surface of the housing 4 are denoted by the signs of the display section 82 and the switch 84.

The controller 7 is accommodated in the housing 4 and is mounted on a control board disposed, for example, behind the inner block 44. The buzzer 83 is also accommodated in the housing 4 and is mounted on, for example, the control board. The controller 7 is electrically connected to the open/close unit 6, the display section 82, the buzzer 83, the switch 84, and the temperature detector 5. The controller 7 controls at least the open/close unit 6, the display section 82, and the buzzer 83.

The controller 7 includes, for example, a microcomputer as a main component. The microcomputer executes a program stored in a memory of the microcomputer by a Central Processing Unit (CPU) to realize the function as the controller 7. The program may be stored in a memory of the microcomputer in advance, provided by a non-transitory recording medium such as a memory card storing the program, or via telecommunications network. In other words, the program is a program for causing the microcomputer to function as the controller 7.

Moreover, the controller 7 has a function as a notifier 71 and a function as a state presentation unit 72. The notifier 71 performs notification when a caution determination condition including that the detection temperature by the temperature detector 5 is higher than or equal to a caution temperature lower than the threshold temperature is satisfied. In the present embodiment, for example, the notification by the notifier 71 is realized by outputting a caution sound from the buzzer 83 and displaying a caution by the display section 82. That is, the controller 7 controls the buzzer 83 and the display section 82 to realize the notification by the notifier 71. The state presentation unit 72 presents whether the open/close unit 6 is in the conduction state or in the interruption state. In the present embodiment, for example, presentation by the state presentation unit 72 is realized by outputting a warning sound from the buzzer 83 and displaying a warning by the display section 82. That is, the controller 7 controls the buzzer 83 and the display section 82 to realize the presentation by the state presentation unit 72. The controller 7 (including the notifier 71 and the state presentation unit 72) will be described in detail in "(2.3) Operation".

An operation is given to the switch 84 to stop the sound output from the buzzer 83. That is, when a push operation is given to the switch 84 while the buzzer 83 outputs a caution sound or a warning sound, the controller 7 controls the buzzer 83 such that the buzzer 83 is stopped. Moreover, the switch 84 is also used as a test switch and is used also when the open/close unit 6 is forcibly switched from the conduction state to the interruption state.

The open/close unit 6 is electrically connected between the terminal member 2 and the connection member 3. The open/close unit 6 is a device configured to be switched between two states, namely, the conduction state and the interruption state. That is, when the open/close unit 6 is in the conduction state, the terminal member 2 electrically conducts the connection member 3 via the open/close unit 6, and when the open/close unit 6 is in the interruption state, the terminal member 2 is electrically disconnected (insulated) from the connection member 3 via the open/close unit 6. In the present embodiment, as described above, the electrical outlet 1 includes the pair of terminal members 2 having opposite polarities, and the open/close unit 6 is electrically connected to both the pair of terminal members 2. Therefore, when the open/close unit 6 is in the interruption state, all of the two pairs (that is, four) connection members 3 are electrically disconnected from the terminal members 2.

Specifically, the open/close unit 6 includes a pair of contact devices having opposite polarities and an electromagnetic release device. Each of the pair of contact devices includes a fixed contact point and a movable contact point. The movable contact point moves between a closed position at which the movable contact point is in contact with the fixed contact point and an open position at which the movable contact point is apart from the fixed contact point. To the fixed contact point, the terminal member 2 is electrically connected, and to the movable contact point, the connection member 3 is electrically connected. Specifically, the movable contact point is provided to a movable contact, and the movable contact is connected to the lead plate 30 via a braided wire, thereby electrically connecting the movable contact to the connection member 3.

The open/close unit 6 having such a configuration in a regular state is in the conduction state in which the movable contact point is located in the closed position, and the open/close unit 6 electrically connects the terminal member 2 to the connection member 3. On the other hand, when receiving a drive signal from the controller 7, the open/close unit 6 activates the electromagnetic release device to drive the movable contact and moves the movable contact point to the open position, so that the open/close unit 6 is switched to the interruption state where the terminal member 2 is electrically interrupted from the connection member 3. As described above, the open/close unit 6 is switched from the conduction state to the interruption state by the driving signal from the controller 7.

Moreover, the operation member 81 is mechanically connected to the open/close unit 6. The operation member 81 is a lever handle rotatable about a rotary shaft as the center. Here, the inner cover 43 and the outer cover 42 respectively has a first operation hole 434 and a second operation hole 421 such that an operation can be given to the operation member 81 from the front of the housing 4. That is, the operation member 81 is exposed at the front of the housing 4 through the first operation hole 434 and the second operation hole 421, and an operation can be given from the front of the housing 4.

The operation member 81 rotates along with the open/close unit 6 and moves between an on-position (see FIG. 2A) and an off-position (see FIG. 2B). The on-position is a position corresponding to the conduction state of the open/close unit 6, and the off-position is a position corresponding to the interruption state of the open/close unit 6. That is, when the open/close unit 6 is in the conduction state, as illustrated in FIG. 2A, the operation member 81 is located in the on-position. When the operation member 81 is in the on-position, a front surface of the operation member 81 is substantially flush with the front surface of the housing 4. On the other hand, when the open/close unit 6 is switched from the conduction state to the interruption state, the operation member 81 rotates and moves a tip end of the operation member 81 to the front (near side), and as illustrated in FIG. 2B, the operation member 81 moves to the off-position. When the operation member 81 is in the off-position, the operation member 81 protrudes forward from the front surface of the housing 4.

As described above, the operation member 81 moves along with the open/close unit 6, and therefore, when the open/close unit 6 receives the drive signal from the controller 7, and then the open/close unit 6 is switched from the conduction state to the interruption state, the operation member 81 moves from the on-position to the off-position. In contrast, when the operation member 81 moves from the off-position to the on-position, the open/close unit 6 is switched from the interruption state to the conduction state. Thus, a user gives an operation to the operation member 81 in the off-position and moves the operation member 81 to the on-position, and thereby, the open/close unit 6 in the interruption state can be switched to the conduction state. In the following description, the operation that moves the operation member 81 from the off-position to the on-position is referred to a "restoration operation". The restoration operation will be described in detail in "(2.3) Operation".

Moreover, in the present embodiment, the open/close unit 6 is switched from the conduction state to the interruption state not only when receiving the drive signal from the controller 7 but also when the operation member 81 is moved from the on-position to the off-position. Thus, the conduction state and the interruption state of the open/close unit 6 is manually switchable by an operation given to the operation member 81 by a user. In other words, the open/close unit 6 functions as a switching device configured to be turned on/off in accordance with the operation given to the operation member 81.

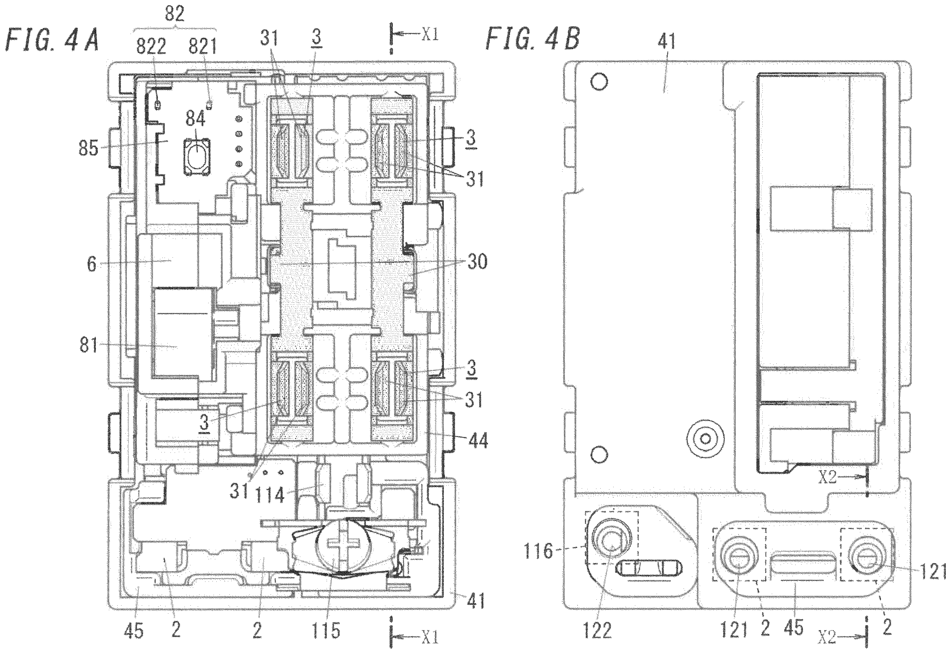

Next, configurations of the connection member 3 and the terminal member 2 will be described with reference to FIGS. 4A to 5B.

The two pairs (that is, four) connection members 3 are, as illustrated in FIGS. 4A and 5A, held by the inner block 44. Here, the two pairs of connection members 3 are disposed at locations corresponding to the respective two pairs of insertion holes 111 formed in the outer cover 42, specifically, at four corners of the inner block 44 in front view. Moreover, as described above, each two connection members 3, having the same polarities, that is, each two connection members 3 aligned in the upward/downward direction are connected to each other via the lead plate 30. Each of the pair of lead plates 30 having opposite polarities has a strip plate shape elongated more in the upward/downward direction than in the rightward/leftward direction. Here, each two connection members 3 having the same polarities and the lead plates 30 are integrally formed from one metal plate. In FIGS. 4A and 5A, metal plates forming the connection members 3 and the lead plates 30 are hatched (hatched with dots).

Each connection member 3 is a blade reception member, to which the blade 911 of the plug 91 is inserted when the plug 91 is connected. Each connection member 3 is made of conductive and elastic metal such as copper or a copper alloy. Each connection member 3 has a pair of blade receiving pieces 31 facing each other in the rightward/leftward direction. Each connection member 3 is electrically connected to the blade 911 in a state where the blade 911 is sandwiched between the pair of blade receiving pieces 31, and each connection member 3 mechanically holds the blade 911.

The pair of terminal members 2 are held by the terminal block 45 as illustrated in FIGS. 4B and 5B. Here, the pair of terminal members 2 are disposed to correspond to the pair of terminal holes 121 formed in a rear surface of the terminal block 45. Each terminal member 2 is an insertion-type quick connection terminal into which a core wire 921 of the feed line 92 is inserted for connection of the feed line 92. Specifically, each terminal member 2 includes a terminal plate 21 and a lock spring 22 as illustrated in FIG. 5B. The terminal plate 21 is made of conductive metal such as a copper or a copper alloy. The lock spring 22 is mad of elastic metal such as stainless steel. When the feed line 92 is inserted into the terminal hole 121 formed in a rear surface of the housing 4, each terminal member 2 is electrically connected to the feed line 92 and mechanically holds the blade 911 in a state where a core wire of the feed line 92 is pinched between the terminal plate 21 and the lock spring 22.

The terminal block 45 further holds a grounding terminal 116 (see FIG. 4B) for connection of a grounding cable. The grounding terminal 116 is an insertion-type quick connection terminal similar to the terminal member 2 and is disposed to correspond to a grounding terminal hole 122 formed in the rear surface of the terminal block 45. In the housing 4, the grounding terminal 116 is electrically connected to the first grounding member 114 and the second grounding member 115.

The temperature detector 5 detects, as a detection temperature, a temperature of at least one of the terminal member 2 or the connection member 3. The temperature detector 5 is accommodated in the housing 4. In the present embodiment, the temperature detector 5 includes a first temperature sensor 51 (see FIG. 1) and a second temperature sensor 52 (see FIG. 1). The first temperature sensor 51 is a sensor for detecting a temperature of the terminal member 2. The second temperature sensor 52 is a sensor for detecting a temperature of the connection member 3. Thus, the first temperature sensor 51 is thermally coupled to the terminal member 2, and the second temperature sensor 52 is thermally coupled to the connection member 3. Each of the first temperature sensor 51 and the second temperature sensor 52 is realized by, for example, a thermistor, a thermocouple, a bimetal, or a thermopile.

The temperature detector 5 outputs detection signals according to the detection temperatures detected by the first temperature sensor 51 and the second temperature sensor 52 to the controller 7. As used herein, "detection signal" is at least a signal (electric signal) for transmitting information according to a temperature by a specific symbol and is a signal whose electric quantity such as a resistance value, a voltage value, or a current value changes in accordance with the temperature. Moreover, the detection signal may be, for example, a signal whose two values, namely, on/off (or high level/low level) are switched in accordance with whether the temperatures detected by the temperature detector 5 are higher than or equal to the threshold temperature or lower than the threshold temperature. Moreover, the temperature detector 5 may include a processing circuit configured to process outputs of the first temperature sensor 51 and the second temperature sensor 52 to output the detection signal.

### (2.2) Configuration of Temperature Detector

Next, the configuration of the temperature detector 5 will be described with reference to FIGS. 5A and 5B.

The second temperature sensor 52 for detecting the temperature of the connection member 3 is disposed, for example, behind a central part of the lead plate 30 in the upward/downward direction, as illustrated in FIG. 5A, in a state where the second temperature sensor 52 is thermally coupled to the lead plate 30. The second temperature sensor 52 is thermally coupled to the lead plate 30 by, for example, directly fixing the second temperature sensor 52 to the lead plate 30 with a clip or the like. Here, a pair of second temperature sensors 52 are provided to correspond to the pair of lead plates 30 having opposite polarities. That is, the temperature detector 5 includes the pair of second temperature sensors 52.

In this embodiment, the temperature of the connection member 3 detected by the temperature detector 5 is for example, a temperature at any one of a plurality of detection points P1 to P11 shown in FIG. 5A. That is, a temperature rise of the connection member 3 occurs in many cases when a contact part of the connection member 3 to the blade 911 becomes a heat source. Thus, the temperature detector 5 may detect, as the temperature of the connection member 3, a temperature at a detection point P1, P2, P10, P11 or the like close to the contact part of the connection member 3 to the blade 911. Moreover, when the temperature rise of any one of the connection members 3 occurs, heat of the connection member 3 is transmitted by thermal conduction to the lead plate 30 and another connection member 3 coupled to the lead plate 30. Thus, the temperature detector 5 may detect, as the temperature of the connection member 3, a temperature at, for example, the detection point P7 set to the central part of the lead plate 30 in the upward/downward direction.

When a further temperature rise of the connection member 3 occurs, heat from the connection member 3 or the lead plate 30 may be transmitted to the holder member that holds the connection member 3. In particular, as in the present embodiment, when the holder member is a member constituted by, for example, the inner block 44 and the outer cover 42 which are made of a synthetic resin, properties of the holder member (the inner block 44 and the outer cover 42) are influenced by the heat, which may lead to a change (including a change in quality, discoloring, and deformation) of the properties of the holder member. Thus, the temperature detector 5 may detect, as the temperature of the connection member 3, a temperature at the detection point P5, P6, P8, P9 or the like close to the contact part of the connection member 3 and the lead plate 30 to the holder member (the inner block 44 and the outer cover 42).

The first temperature sensor 51 for detecting the temperature of the terminal member 2 is, for example, as illustrated in FIG. 5B, disposed in front of the terminal plate 21 of the terminal member 2 in a state where the first temperature sensor 51 is thermally coupled to the terminal plate 21. The first temperature sensor 51 is mounted on a sensor substrate 511. The first temperature sensor 51 is thermally coupled to the terminal plate 21 by, for example, providing a heat transfer sheet 512 being heat conductive property and electrically insulating between the terminal plate 21 and the first temperature sensor 51. Thus, heat of the terminal plate 21 is transmitted via the heat transfer sheet 512 to the first temperature sensor 51 by the thermal conduction. Here, a pair of first temperature sensors 51 are provided to correspond to the pair of thermal members 2 such that they have opposite polarities. That is, the temperature detector 5 includes the pair of first temperature sensors 51.

In this embodiment, the temperature of the terminal member 2 detected by the temperature detector 5 is for example, a temperature at any one of plurality of detection points P21 to P25 shown in FIG. 5B. That is, a temperature rise of the terminal member 2 occurs in many cases when a contact part of the terminal member 2 to the core wire 921 becomes a heat source. Thus, the temperature detector 5 may detect, as the temperature of the terminal member 2, a temperature at the detection point P24, P25, or the like of the terminal member 2, the detection point P24, P25, or the like being close to the contact part to the core wire 921. Moreover, when the temperature rise of the terminal member 2 occurs, heat of the terminal member 2 is transmitted to the entirety of the terminal plate 21 by thermal conduction. Thus, the temperature detector 5 may detect, as the temperature of the terminal member 2, a temperature at the detection point P22 or the like of the terminal plate 21, the detection point P22 being close to the first temperature sensor 51.

Moreover, when the temperature rise of the terminal member 2 occurs, heat from the terminal member 2 may be transmitted to the holder member that holds the terminal member 2. In particular, as in the present embodiment, when the holder member is for example, the terminal block 45 made of a synthetic resin, the property of the holder member (the terminal block 45) is influenced by the heat, which may lead to a change (including a change in quality, discoloring, and deformation) of the properties of the holder member. Thus, the temperature detector 5 may detect, as the temperature of the terminal member 2, a temperature at the detection point P21, P23, or the like of the terminal member 2, the detection point P21, P23, or the like being close to the contact part to the holder member (the terminal block 45).

When a further temperature rise of the connection member 3 occurs, heat dissipation from the connection member 3 or the lead plate 30 also increases the temperature in an internal space 40 (see FIG. 5A) of the housing 4. Similarly, when the temperature rise of the terminal member 2 occurs, heat dissipation from the terminal plate 21 or the lock spring 22 increases the temperature in the internal space 40 of the housing 4. Thus, the temperature detector 5 may detect a temperature, not on the connection member 3, the lead plate 30, or the terminal member 2, but at the detection point P12, P13, P14 (see FIG. 5A) or the like set in the internal space 40 of the housing 4, thereby indirectly detecting the temperature of the connection member 3 or the terminal member 2.

The arrangement of the first temperature sensor 51 and the second temperature sensor 52 and the locations of the detection points P1 to P14 and P21 to P25 shown in FIGS. 5A and 5B are mere examples and thus may be modified.

### (2.3) Operation

Next, operation of the electrical outlet system 10 according to the present embodiment will be described.

The electrical outlet system 10 basically operates such that the open/close unit 6 is switched from the conduction state to the interruption state when the determination condition is satisfied. The determination condition includes that the detection temperature is higher than or equal to a threshold temperature. Here, the detection temperature is the temperature of at least one of the terminal member 2 or the connection member 3 detected by the temperature detector 5. The open/close unit 6 is switchable from the interruption state to the conduction state when the determination condition is not satisfied.

In the present embodiment, the controller 7 receives the detection signal from the temperature detector 5 to acquire the detection temperature. Then, the controller 7 compares the detection temperature with the threshold temperature stored in memory or the like to determine whether or not the determination condition is satisfied. If the controller 7 determines that the determination condition is satisfied, the controller 7 outputs the drive signal to the open/close unit 6, thereby switching the open/close unit 6 from the conduction state to the interruption state. Moreover, in the present embodiment, for example, the determination condition includes only that the detection temperature is higher than or equal to the threshold temperature. That is, when the detection temperature is higher than or equal to the threshold temperature, the determination condition is satisfied, and when the detection temperature is lower than the threshold temperature, the determination condition is not satisfied.

Here, in the present embodiment, the temperature detector 5 detects the temperature of the connection member 3 as the detection temperature and detects the temperature of the terminal member 2 as an auxiliary detection temperature. When an auxiliary determination condition including that the auxiliary detection temperature is higher than or equal to an auxiliary threshold temperature is satisfied, the open/close unit 6 is switched from the conduction state to the interruption state, and switching of the open/close unit 6 from the interruption state to the conduction state is restricted. That is, in the present embodiment, the temperature detector 5 detects only the temperature of the connection member 3 of the terminal member 2 and the connection member 3 as the detection temperature and detects the temperature of the terminal member 2 as the auxiliary detection temperature different from the detection temperature.

Thus, when the temperature of the connection member 3 of the terminal member 2 and the connection member 3 satisfies the determination condition, the open/close unit 6 is switched from the conduction state to the interruption state, and when the temperature of the connection member 3 does not satisfy the determination condition, the open/close unit 6 is switchable from the interruption state to the conduction state. When the temperature of the terminal member 2 (auxiliary detection temperature) satisfies the auxiliary determination condition, the open/close unit 6 is switched from the conduction state to the interruption state, but switching of the open/close unit 6 from the interruption state to the conduction state is restricted. That is, when the auxiliary detection temperature satisfies the auxiliary determination condition, the switching of the open/close unit 6 from the interruption state to the conduction state is restricted (e.g., prohibited) even after the auxiliary determination condition is no longer satisfied.

In the present embodiment, for example, the auxiliary determination condition includes, similar to the determination condition, only that the auxiliary detection temperature is higher than or equal to the auxiliary threshold temperature. That is, when the auxiliary detection temperature is higher than or equal to the auxiliary threshold temperature, the auxiliary determination condition is satisfied, and when the auxiliary detection temperature is lower than the auxiliary threshold temperature, the auxiliary determination condition is not satisfied. Similarly, the caution determination condition used to determine whether or not the notification by the notifier 71 is performed includes, in the present embodiment, only that the detection temperature is higher than or equal to the caution temperature. That is, when the detection temperature is higher than or equal to the caution temperature, the caution determination condition is satisfied, and when the detection temperature is lower than the caution temperature, the caution determination condition is not satisfied.

Moreover, in the present embodiment, examples of a display form of the display section 82 include a plurality of patterns of display forms depending on combinations of lighting states (e.g., extinction, lighting, or blinking) of the first indicator lamp 821 and the second indicator lamp 822. For example, the display section 82 lights the first indicator lamp 821 and extinguishes the second indicator lamp 822 in a regular state where the open/close unit 6 is in the conduction state to perform "normal" display. On the other hand, when the caution determination condition including that the detection temperature by the temperature detection unit 5 is higher than or equal to the caution temperature lower than the threshold temperature is satisfied, the display section 82 lights the first indicator lamp 821 and causes the second indicator lamp 822 to blink to perform "caution" display. Moreover, when the open/close unit 6 is switched from the conduction state to the interruption state, the display section 82 lights the first indicator lamp 821 and lights the second indicator lamp 822 to perform "warning" display.

Similarly, examples of a form of an output sound from the buzzer 83 include a plurality of patterns of forms including a caution sound realizing the notification by the notifier 71, and a warning sound realizing the presentation by the state presentation unit 72. That is, the buzzer 83 is off in the regular state where the open/close unit 6 is in the conduction state, and when the caution determination condition including that the detection temperature by the temperature detection unit 5 is higher than or equal to the caution temperature lower than the threshold temperature is satisfied, the buzzer 83 outputs the caution sound. Moreover, when the open/close unit 6 is switched from the conduction state to the interruption state, the buzzer 83 outputs a warning sound different from the caution sound.

Moreover, in the present embodiment, the threshold temperature is set to be lower than the detection temperature at which a prescribed change is caused in the property of the holder member. That is, as described above, heat from the connection member 3 may be transmitted to the holder member (the inner block 44 and the outer cover 42) holding the connection member 3, the property of the holder member is influenced by the heat, which may lead to a change (including a change in quality, discoloring, and deformation) of the properties of the holder member. On the other hand, in the electrical outlet system 10 according to the present embodiment, the open/close unit 6 is preferably opened to avoid the property of the holder member being out of an allowable range, so that the electrical outlet 1 is reusable even after the occurrence of a temperature rise. As used herein "prescribed change" is a change of the property of the holder member, the change being caused when the property reaches the upper limit of the allowable range. For example, when the allowable range of the property of the holder member is defined in accordance with a certain standard, the property of the holder member is preferably within the allowable range even in the case of the temperature rise. Thus, a temperature lower than the detection temperature when a prescribed change of the property of the holder member occurs is defined as the threshold temperature, and thereby, the open/close unit 6 is allowed to be in the interruption state before the property of the holder member changes beyond the prescribed range. Thus, before the property of the holder member is deteriorated, the open/close unit 6 is brought into the interruption state to reduce a further temperature rise, thereby preparing for reuse of the electrical outlet 1.

Moreover, the electrical outlet system 10 according to the present embodiment includes the operation member 81 configured to receive an operation given by a user as described above, and the electrical outlet system 10 is configured to cause the operation member 81 to operate along with the open/close unit 6. Thus, the open/close unit 6 is switched from the interruption state to the conduction state by an operation (a restoration operation) given to the operation member 81 when the determination condition is not satisfied. That is, after the determination condition is satisfied and the open/close unit 6 is switched from the conduction state to the interruption state, a factor based on which the determination condition is satisfied is eliminated, and if the restoration operation is given in a state where the determination condition is no longer satisfied, the open/close unit 6 is switched from the interruption state to the conduction state. Therefore, a user can manually switch the open/close unit 6 from the interruption state to the conduction state.

Moreover, in the present embodiment, as described above, the operation member 81 moves, along with the open/close unit 6, between an on-position and an off-position. That is, the location of the operation member 81 also presents whether the open/close unit 6 is in the conduction state or in the interruption state, and therefore, the operation member 81 also functions as a state presentation unit configured to present the state of the open/close unit 6. In the present embodiment, the operation member 81 has a part which is visually perceivable only when the operation member 81 is in the off-position and which is colored red or the like, and thereby, whether the operation member 81 is in the on-position or the off-position is visually perceivable from a distance.

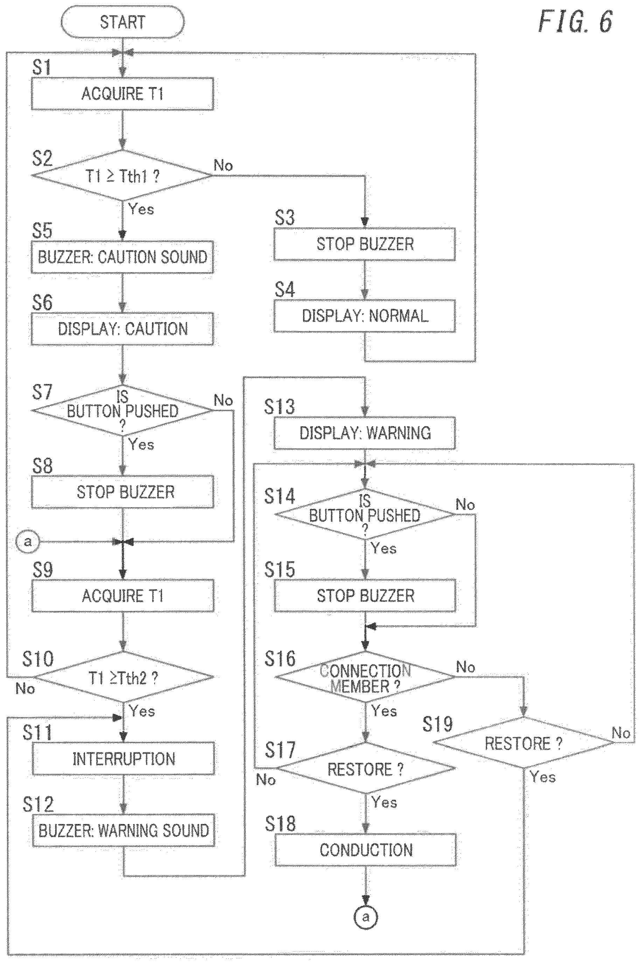

An example of operation of the electrical outlet system 10 according to the present embodiment will be described below with reference to the flowchart in FIG. 6. Moreover, the flowchart in FIG. 6 is a mere example, and the order of the steps may accordingly be changed, or a step may accordingly be added, or one or more of the steps may be omitted.

In FIG. 6, first, the controller 7 receives a detection signal from the temperature detector 5 to acquire (S1) a measured temperature T1. The measured temperature T1 includes both the temperature (detection temperature) of the connection member 3 and the temperature (auxiliary detection temperature) of the terminal member 2.

Next, the controller 7 compares (S2) the measured temperature T1 to a caution temperature Tth1. The caution temperature Tth1 is a temperature compared to the detection temperature to determine whether or not the caution determination condition is satisfied, that is, whether or not the notifier 71 is caused to perform notification. The caution temperature Tth1 is a temperature lower than the threshold temperature Tth2. If the measured temperature T1 is lower than the caution temperature Tth1 (S2: No), the controller 7 determines that the caution determination condition is not satisfied, and the controller executes a stop process (S3) of the buzzer 83, and the "normal" display (S4) performed by the display section 82, and the process returns to step S1.

On the other hand, if in step S2, the measured temperature T1 is higher than or equal to the caution temperature Tth1 (S2: Yes), the controller 7 determines that the caution determination condition is satisfied, and the controller 7 performs the notification by the notifier 71, that is, outputting (S5) of a caution sound from the buzzer 83 and performing (S6) of the "caution" display by the display section 82. In this state, if a push operation is given to the switch 84, that is, a stop button of the buzzer 83 is pushed (S7: Yes), the controller 7 executes the stop process (S8) of the buzzer 83 and acquires (S9) the measured temperature T1. If the push operation is not given to the switch 84, that is, the stop button of the buzzer 83 is not pushed (S7: No), the controller 7 skips the stop process (S8) of the buzzer 83 and acquires (S9) the measured temperature T1.

Next, the controller 7 compares (S10) the measured temperature T1 acquired in step S9 to the threshold temperature Tth2. The threshold temperature Tth2 is a temperature to be compared to the detection temperature to determine whether or not the determination condition is satisfied, that is, whether or not the open/close unit 6 enters the interruption state. Moreover, in the present embodiment, the threshold temperature Tth2 also serves as the auxiliary threshold temperature to be compared to the auxiliary detection temperature to determine whether or not the auxiliary determination condition is satisfied. That is, the auxiliary threshold temperature is equal to the threshold temperature Tth2. If the measured temperature T1 is lower than the threshold temperature Tth2 (S10: No), the controller 7 determines that neither the determination condition nor the auxiliary determination condition is satisfied, and the process returns to step S1.

Thus, even when it is once determined that the caution determination condition is satisfied and the notification by the notifier 71 is performed, if the measured temperature T1 thereafter decreases and falls below the caution temperature Tth1 (S2: No), the stop process (S3) of the buzzer 83 and the "normal" display (S4) by the display section 82 are performed. Thus, for example, even when a transient event causes a temperature rise, the measured temperature T1 decreases, and it is determined that the measured temperature T1 is higher than or equal to the caution temperature Tth1, the notification by the notifier 71 is automatically stopped when the measured temperature T1 decreases thereafter.

In contrast, in step S10, if the measured temperature T1 is higher than or equal to the threshold temperature Tth2 (S10: Yes), the controller 7 determines that the determination condition or the auxiliary determination condition is satisfied, and the controller 7 outputs a drive signal to the open/close unit 6 to switch (S 11) the open/close unit 6 from the conduction state to the interruption state. Then, the controller 7 performs presentation by the state presentation unit 72, that is, outputting (S12) of a warning sound from the buzzer 83 and performing (S13) of the "warning" display by the display section 82. In this state, if a push operation is given to the switch 84, that is, the stop button of the buzzer 83 is pushed (S14: Yes), the controller 7 executes the stop process (S15) of the buzzer 83, and the process proceeds to step S16. If the push operation is not given to the switch 84, that is, the stop button of the buzzer 83 is not pushed (S14: No), the controller 7 skips the stop process (S15) of the buzzer 83, and the process proceeds to step S16.

In step S16, the controller 7 determines whether or not the measured temperature T1, which has been determined to be higher than or equal to the threshold temperature Tth2, is the temperature of the connection member 3. That is, if the measured temperature T1 at this time is the temperature of the connection member 3 (S16: Yes), this means that it is determined in step S10 that the determination condition is satisfied, and therefore, The process proceeds to step S17 in which the controller 7 can switch the open/close unit 6 from the interruption state to the conduction state. In this state, if the restoration operation is given to the operation member 81 (S17: Yes), the open/close unit 6 is switched (S18) from the interruption state to the conduction state, and the process proceeds to step S9. At this time, if the factor for satisfaction of the determination condition is not eliminated, that is, if the measured temperature T1 is still higher than or equal to the threshold temperature Tth2 (S10: Yes), the controller 7 immediately switches (S1 1) the open/close unit 6 from the conduction state to the interruption state. In contrast, if the factor for satisfaction of the determination condition is eliminated, and the measured temperature T1 is lower than the threshold temperature Tth2 (S10: No), the controller 7 determines that neither the determination condition nor the auxiliary determination condition is satisfied, and the process returns to step S1. Thus, the open/close unit 6 maintains the conduction state, and the electrical outlet 1 enters a reusable state.

In contrast, if in step S16, the measured temperature T1, which has been determined to be higher than or equal to the threshold temperature Tth2, is determined not to be the temperature of the connection member 3 (S16: No), this means that it is determined in step S10 that the auxiliary determination condition is satisfied. In this case, the process proceeds to step S19 in which the controller 7 cannot switch the open/close unit 6 from the interruption state to the conduction state. In this state, when the restoration operation is given to the operation member 81 (S19: Yes), the controller 7 forcibly maintains (S11) the open/close unit 6 in the interruption state by the drive signal.

Moreover, if the restoration operation is given in neither the step S17 nor step S19 (S17: No or S19: No), the controller 7 proceeds to step S14.

### (3) Variation

Various modifications may be made depending on design and the like as long as the object of the present disclosure as disclosed in the appended claims is achieved. Moreover, functions similar to those of the controller 7 according to the embodiment may be embodied by a control method, a computer program, a non-transitory storage medium storing a computer program, or the like of the electrical outlet 1.

Variations of the embodiment will be described below. Note that any of the variations to be described below may be combined as appropriate.

The electrical outlet system 10 in the present disclosure includes a computer system in its controller 7, for example. The computer system includes, as principal hardware components, a processor and a memory. The processor executes a program stored in the memory of the computer system, thereby realizing functions as the controller 7 in the present disclosure. The program may be stored in the memory of the computer system in advance, provided via telecommunications network, or provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips, whichever is appropriate. Those multiple chips may be integrated together in a single device or distributed in multiple devices without limitation.

Collecting the plurality of functions in the electrical outlet system 10 in a single housing 4 is not an essential configuration of the electrical outlet system 10. The components of the electrical outlet system 10 may be distributed in a plurality of housings. Still alternatively, at least some functions of, for example, the controller 7, of the electrical outlet system 10 may be implemented as a cloud computing system as well. Conversely, all of those functions of the electrical outlet system 10 may also be integrated together in a single housing 4 as in the embodiment described above.

Moreover, the controller 7 is not an essential component for the electrical outlet system 10 and may accordingly be omitted. Thus, the electrical outlet system 10 operates at least such that when the determination condition is satisfied, the open/close unit 6 is switched from the conduction state to the interruption state, and when the determination condition is not satisfied, the open/close unit 6 is switchable from the interruption state to the conduction state. Thus, for example, when an output (the detection signal) of the temperature detector 5 is input directly to the open/close unit 6, and the open/close unit 6 operates in response to the detection signal, the controller 7 may be omitted. Moreover, for example, also when the temperature detector 5 is bimetal or the like and directly drives the open/close unit 6, the controller 7 may be omitted.

Moreover, the determination condition includes at least that the detection temperature is higher than or equal to the threshold temperature, and the determination condition may include other conditions in addition to that the detection temperature is higher than or equal to the threshold temperature. For example, the determination condition may include that a situation that the detection temperature is higher than or equal to the threshold temperature continues for a predetermined time, occurs a prescribed number of times, or occurs at a frequency higher than or equal to a prescribed value. Similarly, the auxiliary determination condition includes at least that the auxiliary detection temperature is higher than or equal to the auxiliary threshold temperature, and the auxiliary determination condition may include other conditions in addition to that the auxiliary detection temperature is higher than or equal to the auxiliary threshold temperature. Similarly, the caution determination condition includes at least that the detection temperature is higher than or equal to the caution temperature, and the determination condition may include other conditions in addition to that the detection temperature is higher than or equal to the caution temperature.

Moreover, the electrical outlet 1 is not limited to an electrical outlet with a ground electrode but may be an electrical outlet without a ground electrode or, for example, a 200-V AC electrical outlet or a DC outlet. Moreover, the electrical outlet 1 is not limited to a Type-A electrical outlet but may be, for example, an electrical outlet, such as a Type-B or Type-C electrical outlet, to which a plug having a pin-shaped blade is connectable. The electrical outlet 1 is not limited to a 2-port electrical outlet but may be, for example, a 1-port electrical outlet or a 3-port electrical outlet. Moreover, the electrical outlet system 10 may further include, for example, a motion sensor, a timer, a switch, or the like in addition to the electrical outlet 1. Moreover, the terminal member 2 does not have to be a quick connection terminal but may be, for example, a screw terminal. Moreover, the electrical outlet 1 is not limited to a configuration (embedded installation type) installed in a state where a rear portion of the electrical outlet 1 is embedded in the construction surface 100 by using a mounting frame, but the electrical outlet 1 may have a configuration (exposed installation type) installed on the construction surface 100 with the entirety of the electrical outlet 1 being exposed.

Moreover, the electrical outlet 1 may have a lock mechanism which prevents falling off of the plug 91. In the lock mechanism, for example, the plug 91 is rotated to prevent falling off of the blade 911 of the plug 91. The electrical outlet 1 may be an electrical outlet with a safety shutter.

Moreover, in the above-described embodiment, when the electromagnetic release device operates and the open/close unit 6 is switched from the conduction state to the interruption state, the operation member 81 also moves, along with the open/close unit 6, to the off-position, but this should not be construed as limiting. For example, when the open/close unit 6 is switched from the conduction state to the interruption state, the operation member 81 may remain in the on-position. In this case, the restoration operation is realized by once moving the operation member 81 from the on-position to the off-position, and then moving the operation member 81 from the off-position to the on-position.

Moreover, the open/close unit 6 may be realized by, for example, a mechanical relay or a semiconductor switch.

Moreover, in the above-described embodiment, the form of presentation by the state presentation unit 72 is the same in both cases where the determination condition is satisfied and where the auxiliary determination condition is satisfied, but the form is not limited to this example. The state presentation unit 72 may provide different forms of presentation for the case where the determination condition is satisfied and the case where the auxiliary determination condition is satisfied. For example, the display form of the display section 82 may be changed such that when the measured temperature T1, which has been determined to be higher than or equal to the threshold temperature Tth2, is the temperature of the connection member 3, the first indicator lamp 821 is lit, and when the measured temperature T1 is the temperature of the terminal member 2, the first indicator lamp 821 is caused to blink.

In the present disclosure, if one of two values being compared with each other, such as the detection temperature and the threshold temperature, is "greater than or equal to" the other, this phrase may herein cover both a situation where these two values are equal to each other and a situation where one of the two values is greater than the other. However, this should not be construed as limiting. Alternatively, the phrase "greater than or equal to" may also be a synonym of the phrase "greater than" that covers only a situation where one of the two values is over the other. That is to say, it is arbitrarily changeable depending on selection of the threshold value whether or not the phrase "greater than or equal to" covers the situation where the two values are equal to each other. Therefore, from a technical point of view, there is no difference between the phrase "greater than or equal to" and the phrase "greater than." Similarly, the phrase "less than" may be a synonym of the phrase "less than or equal to" as well.

### Reference Signs List

- 2: TERMINAL MEMBER
- 3: CONNECTION MEMBER
- 5: TEMPERATURE DETECTOR
- 6: OPEN/CLOSE UNIT
- 10: ELECTRICAL OUTLET SYSTEM
- 42: OUTER COVER (HOLDER MEMBER)
- 44: INNER BLOCK (HOLDER MEMBER)
- 45: TERMINAL BLOCK (HOLDER MEMBER)
- 71: NOTIFIER
- 72: STATE PRESENTATION UNIT
- 81: OPERATION MEMBER
- 91: PLUG
- 92: FEED LINE

## Claims

1. An electrical outlet system (10), comprising:
a terminal member (2) to which a feed line (92) is to be connected; and
a connection member (3) to which a plug (91) is to be connected, the electrical outlet system (10) further comprises:
a temperature detector (5) configured to detect a temperature of the connection member (3) as a detection temperature and detect a temperature of the terminal member (2) as an auxiliary detection temperature; and
an open/close unit (6) electrically connected between the terminal member (2) and the connection member (3),
the open/close unit (6)
being configured to be switched from a conduction state to an interruption state when a determination condition including that the detection temperature is higher than or equal to a threshold temperature is satisfied,
being switchable from the interruption state to the conduction state when the determination condition is not satisfied,
when an auxiliary determination condition including that the auxiliary detection temperature is higher than or equal to an auxiliary threshold temperature is satisfied, the open/close unit (6) being switched from the conduction state to the interruption state, and switching of the open/close unit (6) from the interruption state to the conduction state being restricted.

2. The electrical outlet system (10) of claim 1, further comprising a holder member (42,44,45) which holds at least one of the terminal member (2) or the connection member (3), wherein
the threshold temperature is set to be lower than the detection temperature at which a prescribed change is caused in a property of the holder member (42,44,45).

3. The electrical outlet system (10) of claim 1 or 2, further comprising a notifier (71) configured to perform notification when a caution determination condition is satisfied, the caution determination condition including that the detection temperature is higher than or equal to a caution temperature lower than the threshold temperature.

4. The electrical outlet system (10) of any one of claims 1 to 3, further comprising a state presentation unit (72) configured to present whether the open/close unit (6) is in the conduction state or in the interruption state.

5. The electrical outlet system (10) of any one of claims 1 to 4, further comprising an operation member (81) configured to receive an operation given by a user, wherein
the open/close unit (6) is switched from the interruption state to the conduction state by the operation given to the operation member (81) when the determination condition is not satisfied.

## Patentansprüche

1. Steckdosensystem (10), umfassend:
ein Anschlusselement (2), an das eine Zuleitung (92) verbunden werden soll; und
ein Verbindungselement (3), an das ein Stecker (91) verbunden werden soll,
wobei das Steckdosensystem (10) ferner umfasst:
einen Temperaturdetektor (5), der so konfiguriert ist, dass er eine Temperatur des Verbindungselements (3) als eine Erkennungstemperatur erkennt und eine Temperatur des Anschlusselements (2) als eine zusätzliche Erkennungstemperatur erkennt; und
eine Öffnungs-/Schließeinheit (6), die elektrisch zwischen dem Anschlusselement (2) und dem Verbindungselement (3) verbunden ist,
die Öffnungs-/Schließeinheit (6)
so konfiguriert ist, dass sie von einem Leitungszustand in einen Unterbrechungszustand umgeschaltet werden soll, wenn eine Bestimmungsbedingung erfüllt ist, die beinhaltet, dass die Erkennungstemperatur höher als oder gleich einer Schwellentemperatur ist,
von dem Unterbrechungszustand in den Leitungszustand umschaltbar ist, wenn die Bestimmungsbedingung nicht erfüllt ist,
wenn eine zusätzliche Bestimmungsbedingung, die beinhaltet, dass die zusätzliche Erkennungstemperatur höher oder gleich einer zusätzlichen Schwellentemperatur ist, erfüllt ist, die Öffnungs-/Schließeinheit (6) von dem Leitungszustand in den Unterbrechungszustand umgeschaltet wird, und das Umschalten der Öffnungs-/Schließeinheit (6) von dem Unterbrechungszustand in den Leitungszustand eingeschränkt wird.

2. Steckdosensystem (10) nach Anspruch 1, ferner umfassend ein Halteelement (42, 44, 45), das mindestens eines von dem Anschlusselement (2) oder dem Verbindungselement (3) hält, wobei
die Schwellentemperatur so eingestellt ist, dass sie niedriger als die Erkennungstemperatur ist, bei der eine vorgeschriebene Änderung durch eine Eigenschaft des Halteelements (42, 44, 45) bewirkt wird.

3. Steckdosensystem (10) nach Anspruch 1 oder 2, ferner umfassend einen Melder (71), der so konfiguriert ist, dass er eine Benachrichtigung durchführt, wenn eine Warnbestimmungsbedingung erfüllt ist, wobei die Warnbestimmungsbedingung beinhaltet, dass die Erkennungstemperatur höher als oder gleich einer Warntemperatur ist, die niedriger als die Schwellentemperatur ist.

4. Steckdosensystem (10) nach einem der Ansprüche 1 bis 3, ferner umfassend eine Zustandsdarstellungseinheit (72), die so konfiguriert ist, dass sie darstellt, ob sich die Öffnungs-/Schließeinheit (6) in dem Leitungszustand oder in dem Unterbrechungszustand befindet.

5. Steckdosensystem (10) nach einem der Ansprüche 1 bis 4, ferner umfassend ein Betätigungselement (81), das so konfiguriert ist, dass es eine Betätigung aufnimmt, die von einem Benutzer zugewiesen wird, wobei
die Öffnungs-/Schließeinheit (6) von dem Unterbrechungszustand in den Leitungszustand durch die Betätigung umgeschaltet wird, die dem Betätigungselement (81) zugewiesen wird, wenn die Bestimmungsbedingung nicht erfüllt ist.

## Revendications

1. Système de prise électrique (10), comprenant :
un élément borne (2) auquel une conduite d'alimentation (92) doit être connectée ; et
un élément de connexion (3) auquel une fiche électrique (91) doit être connectée,
le système de prise électrique (10) comprenant en outre :
un détecteur de température (5) conçu pour détecter une température de l'élément de connexion (3) en tant que température de détection, et pour détecter une température de l'élément borne (2) en tant que température de détection auxiliaire ; et
une unité d'ouverture/fermeture (6) connectée électriquement entre l'élément borne (2) et l'élément de connexion (3),
l'unité d'ouverture/fermeture (6)
étant conçue pour être commutée d'un état de conduction à un état d'interruption lorsqu'une condition de détermination, comprenant que la température de détection soit supérieure ou égale à une température seuil, est satisfaite,
étant commutable de l'état d'interruption à l'état de conduction lorsque la condition de détermination n'est pas satisfaite,
lorsqu'une condition de détermination auxiliaire, comprenant que la température de détection auxiliaire soit supérieure ou égale à une température seuil auxiliaire, est satisfaite, l'unité d'ouverture/fermeture (6) étant commutée de l'état de conduction à l'état d'interruption, et la commutation de l'unité d'ouverture/fermeture (6) de l'état d'interruption à l'état de conduction étant restreinte.

2. Le système de prise électrique (10) de la revendication 1, comprenant en outre un élément de retenue (42, 44, 45) destiné à tenir au moins un élément parmi l'élément borne (2) et l'élément de connexion (3),
la température seuil étant réglée de façon à être inférieure à la température de détection à laquelle une variation prescrite se produit dans une propriété de l'élément de retenue (42, 44, 45).

3. Le système de prise électrique (10) des revendications 1 ou 2, comprenant en outre un élément de notification (71) conçu pour effectuer une notification lorsqu'une condition de détermination d'avertissement est satisfaite, la condition de détermination d'avertissement comprenant que la température de détection soit supérieure ou égale à une température d'avertissement inférieure à la température seuil.

4. Le système de prise électrique (10) de l'une quelconque des revendications 1 à 3, comprenant en outre une unité de présentation d'état (72) conçue pour montrer si l'unité d'ouverture/fermeture (6) est en état de conduction ou en état d'interruption.

5. Le système de prise électrique (10) de l'une quelconque des revendications 1 à 4, comprenant en outre un élément d'actionnement (81) conçu pour recevoir une commande d'actionnement donnée par un utilisateur,
l'unité d'ouverture/fermeture (6) étant commutée de l'état d'interruption à l'état de conduction au moyen de la commande d'actionnement donnée à l'élément d'actionnement (81) lorsque la condition de détermination n'est pas satisfaite.
